# EUROPEAN PATENT APPLICATION

(11) **EP 4 589 967 A1**
(43) Date of publication of application: **23.07.2025**
(21) Application number: 22961510.9
(22) Date of filing: 05.10.2022
(51) Int. Cl.: H04N 21/475, H04N 21/422, G06F 3/16

(54) **DISPLAY DEVICE AND OPERATION METHOD THEREOF**

(71) Applicant: LG Electronics Inc., Yeongdeungpo-gu Seoul 07336 (KR)
(72) Inventor: KIM, Changhoe, Seoul 06772 (KR)
(74) Representative: Schornack, Oliver
(86) International application number: PCT/KR2022/014969
(87) International publication number: WO 2024/075865

(57) **Abstract**

A display device of the present disclosure includes: a display unit for displaying memos; a storage unit for storing memos; and a control unit that processes memos, wherein the control unit may provide, when a personal account of a memo creator is selected from a list of registered accounts, a personal memo creation window corresponding to the personal account of the memo creator, store, when a personal memo and output setting information therefor are created through the personal memo creation window, the created personal memo and the output setting information therefor in the storage unit, and output the stored personal memo when conditions are met that satisfy the output setting information for the personal memo.

## Description

### [Technical Field]

The present disclosure relates to a display device capable of providing a personalized memo function for each registered account and a method for operating the same.

### [Background Art]

In general, a display device is a device that has the function of receiving, processing, and displaying images that can be viewed by a user. A display device receives a broadcast signal selected by a user from among broadcast signals transmitted from a broadcasting station, separates an image signal from the received signal, and then displays the separated image signal on a display.

In recent years, due to the development of broadcasting technology and network technology, the functions of display devices have diversified considerably, and the performance of the devices has also improved accordingly. In other words, display devices have evolved to provide users with not only broadcast content but also various other content.

For example, the display device can provide not only programs received from broadcasting stations, but also game play, music appreciation, Internet shopping, and customized information using various applications. In order to perform these expanded functions, the display device is basically connected to other devices or networks using various communication protocols, and can provide a ubiquitous computing environment to the user. In other words, the display device has evolved into a smart device that enables connectivity to a network and ubiquitous computing.

However, the display device had a problem in that it did not have a personal memo function that allowed users to save and output necessary memo data individually, and a personal memo transfer function that allowed users to transfer saved memos to other users, which reduced user convenience.

Therefore, in the future, it is necessary to develop a display device that can improve user convenience by providing a personalized memo function for each registered account.

### [Disclosure]

### [Technical Problem]

An object of the present disclosure is to solve the above-mentioned problems and other problems.

An object of the present disclosure is to provide a display device that can provide a personal memo function for each registered account and thus improve user convenience by providing a personal memo creation window corresponding to a personal account, and if a personal memo and output setting information of the personal memo are created through the personal memo creation window, outputting a personal memo corresponding to the output setting information of the personal memo, and a method for operating the same.

### [Technical Solution]

A display device according to an embodiment of the present disclosure includes a display part displaying a memo; a storage part storing the memo; and a control part processing the memo, in which the control part, if a personal account of a memo creator is selected from a list of registered accounts, may provide a personal memo creation window corresponding to the personal account of the memo creator, if the personal memo and the output setting information thereof are created through the personal memo creation window, store the created personal memo and the output setting information thereof in the storage part, and, if a condition satisfying the output setting information of the personal memo is reached, output the stored personal memo.

A method for operating a display device according to an embodiment of the present disclosure may include a step of selecting a personal account of a memo creator from a list of registered accounts; a step of providing a personal memo creation window corresponding to the personal account of the memo creator; a step of checking whether a personal memo and the output setting information thereof are created through the personal memo creation window; a step of storing the created personal memo and the output setting information thereof when the personal memo and the output setting information thereof are created; a step of checking whether a condition satisfying the output setting information of the personal memo has arrived; and a step of outputting the stored personal memo if a condition satisfying the output setting information of the personal memo has arrived.

### [Advantageous Effect]

According to one embodiment of the present disclosure, a display device provides a personal memo creation window corresponding to a personal account, and if a personal memo and output setting information of the personal memo are created through the personal memo creation window, the personal memo is output corresponding to the output setting information of the personal memo, thereby providing a personal memo function for each registered account, and thus improving user convenience.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure
Fig. 3 is a view illustrating an actual configuration of a remote control device according to an embodiment of the present disclosure.
Fig. 4 is a view illustrating an example of utilizing a remote control device according to an embodiment of the present disclosure.
FIG. 5 is a block diagram for explaining the operation of a display device according to one embodiment of the present disclosure.
FIG. 6 is a view for explaining a process for requesting a list of registered accounts of a display device according to one embodiment of the present disclosure.
FIG. 7 is a view illustrating a registered account list window of a display device according to one embodiment of the present disclosure.
FIG. 8 is a view illustrating a personal memo creation window of a display device according to an embodiment of the present disclosure.
FIGS. 9 to 15 are views for explaining a personal memo output scenario according to one embodiment of the present disclosure.
FIG. 16 is a flowchart for explaining a method for operating a display device according to an embodiment of the present disclosure.

### [Best Mode]

Hereinafter, embodiments disclosed in the present specification will be described in detail with reference to the attached drawings, and regardless of the drawing symbols, identical or similar components will be given the same reference numerals and redundant descriptions thereof will be omitted. The suffixes "module" and "part" for components used in the description below are assigned or mixed in consideration of easiness in writing the specification and do not have distinctive meanings or roles by themselves. In addition, when describing embodiments disclosed in this specification and if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the spirit and technical scope of the present disclosure.

Terms including ordinal numbers, such as first, second, or the like, may be used to describe various components, but the components are not limited by the terms. The terms are used only to distinguish one component from another.

When it is said that a component is "connected" or "accessed" to another component, it should be understood that it may be directly connected or accessed to that other component, but that there may be other components in between. On the other hand, when it is said that a component is "directly connected" or "directly accessed" to another component, it should be understood that there are no other components in between.

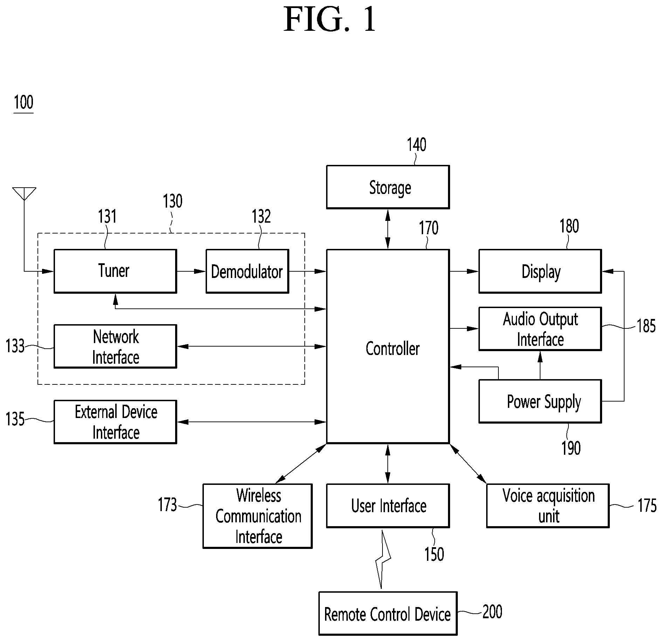

Fig. 1 is a block diagram illustrating a configuration of a display device according to an embodiment of the present disclosure.

Referring to FIG. 1, a display device 100 may include a broadcast reception module 130, an external device interface part 135, a storage part 140, a user input part 150, a control part 170, a wireless communication interface part 173, a display part 180, an audio output part 185, and a power supply part 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation part 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface part 133 may access a predetermined webpage through an accessed network or another network linked to the accessed network. That is, the network interface part 133 may transmit or receive data to or from a corresponding server by accessing a predetermined webpage through the network.

The network interface part 133 may receive content or data provided from a content provider or a network operator. That is, the network interface part 133 may receive content, such as movies, advertisements, games, VODs, and broadcast signals, which are provided from the content provider or the network operator, and information relating thereto through the network.

In addition, the network interface part 133 may receive firmware update information and update files provided from the network operator, and may transmit data to the Internet or content provider or the network operator.

The network interface 133 may select and receive a desired application among applications open to the air, through network.

The external device interface part 135 may receive an application or an application list in an adjacent external device and deliver the application or the application list to the control part 170 or the storage part 140.

The external device interface part 135 may provide a connection path between the display device 100 and an external device. The external device interface part 135 may receive at least one of an image or audio outputted from an external device that is wirelessly or wiredly connected to the display device 100 and deliver the received image or the audio to the controller. The external device interface part 135 may include a plurality of external input terminals. The plurality of external input terminals may include an RGB terminal, at least one High Definition Multimedia Interface (HDMI) terminal, and a component terminal.

An image signal of an external device inputted through the external device interface part 135 may be outputted through the display part 180. A sound signal of an external device inputted through the external device interface part 135 may be outputted through the audio output part 185.

An external device connectable to the external device interface part 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage part 140 may store signal-processed image, voice, or data signals stored by a program in order for each signal processing and control in the control part 170.

In addition, the storage part 140 may perform a function for temporarily storing image, voice, or data signals output from the external device interface part 135 or the network interface part 133, and may store information on a predetermined image through a channel memory function.

The storage part 140 may store an application or an application list input from the external device interface part 135 or the network interface part 133.

The display device 100 may play content files (e.g., video files, still image files, music files, document files, application files, etc.) stored in the storage part 140, and may provide the content files to a user.

The user input part 150 may transmit signals input by a user to the control part 170, or may transmit signals from the control part 170 to a user. For example, the user input part 150 may receive or process control signals such as power on/off, channel selection, and screen setting from the remote control device 200 or transmit control signals from the control part 170 to the remote control device 200 according to various communication methods such as Bluetooth, Ultra Wideband (WB), ZigBee, Radio Frequency (RF), and **IR** communication methods.

In addition, the user input part 150 may transmit, to the control part 170, control signals input from local keys (not shown) such as a power key, a channel key, a volume key, and a setting key.

Image signals that are image-processed by the control part 170 may be input to the display part 180 and displayed as images corresponding to the image signals. In addition, image signals that are image-processed by the control part 170 may be input to an external output device through the external device interface part 135.

Voice signals processed by the control part 170 may be output to the audio output part 185. In addition, voice signals processed by the control part 170 may be input to the external output device through the external device interface part 135.

Additionally, the control part 170 may control overall operations of the display device 100.

In addition, the control part 170 may control the display device 100 by a user command or an internal program input through the user input part 150, and may access the network to download a desired application or application list into the display device 100.

The control part 170 may output channel information selected by a user together with the processed image or voice signals through the display part 180 or the audio output part 185.

In addition, the control part 170 may output image signals or voice signals of an external device such as a camera or a camcorder, which are input through the external device interface part 135, through the display part 180 or the audio output part 185, according to an external device image playback command received through the user input part 150.

Moreover, the control part 170 may control the display part 180 to display images, and may control the display part 180 to display broadcast images input through the tuner 131, external input images input through the external device interface part 135, images input through the network interface part, or images stored in the storage part 140. In this case, an image displayed on the display part 180 may be a still image or video and also may be a 2D image or a 3D image.

Additionally, the control part 170 may play content stored in the display device 100, received broadcast content, and external input content input from the outside, and the content may be in various formats such as broadcast images, external input images, audio files, still images, accessed web screens, and document files.

Moreover, the wireless communication part 173 may perform wired or wireless communication with an external device. The wireless communication part 173 may perform short-range communication with an external device. For this, the wireless communication part 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication part 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication part 173 may detect (or recognize) a wearable device capable of communication around the display device 100. Furthermore, if the detected wearable device is a device authenticated to communicate with the display device 100, the control part 170 may transmit at least part of data processed in the display device 100 to the wearable device through the wireless communication part 173. Therefore, a user of the wearable device may use the data processed by the display device 100 through the wearable device.

The voice acquisition part 175 may acquire audio. The voice acquisition part 175 may include at least one microphone (not shown) and may acquire audio around the display device 100 through the microphone (not shown).

The display part 180 may convert image signals, data signals, or onscreen display (OSD) signals, which are processed in the control part 170, or images signals or data signals, which are received in the external device interface part 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface part 133 or the external device interface part 135 and play them without including the tuner 131 and the demodulation part 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display part 180 and the audio output part 185.

The audio output part 185 receives the audio-processed signal from the control part 170 to output an audio signal.

The power supply part 190 supplies the corresponding power to the entire display device 100. Particularly, power may be supplied to the control part 170 that is capable of being implemented in the form of a system on chip (SOC), the display part 180 for displaying an image, the audio output part 185 for outputting audio, and the like.

Specifically, the power supply part 190 may include a converter that converts AC power to DC power and a DC/DC converter that converts a level of the DC power.

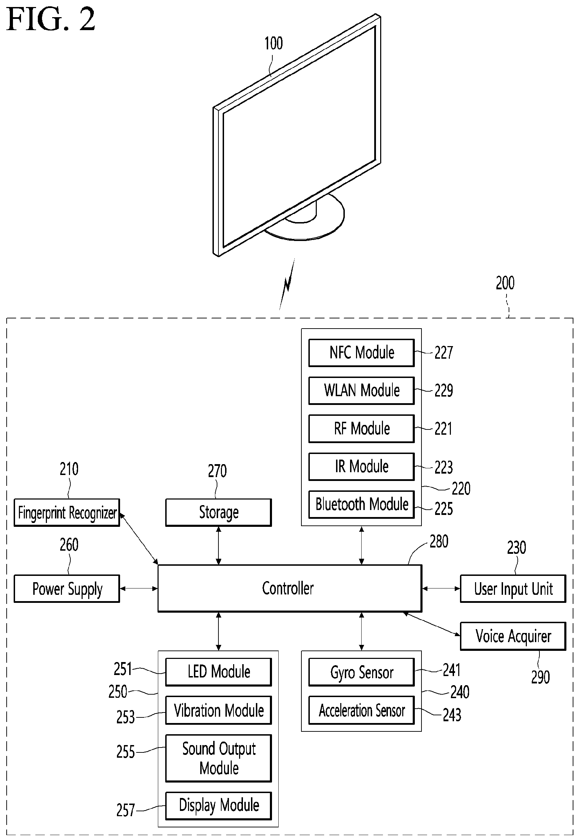

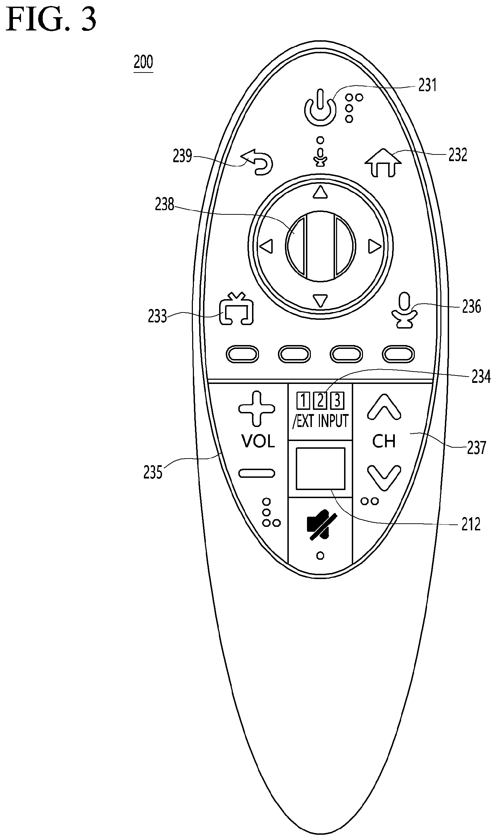

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition part 210, a wireless communication part 220, a user input part 230, a sensor part 240, an output part 250, a power supply part 260, a storage part 270, a control part 280, and a sound acquisition part 290.

Referring to Fig. 2, the wireless communication part 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication part 220.

Moreover, the remote control device 200 may receive signals transmitted from the display device 100 through the RF module 221 and if necessary, may transmit a command for power on/off, channel change, and volume change to the display device 100 through the IR module 223.

The user input part 230 may be configured with a keypad, a button, a touch pad, or a touch screen. A user may operate the user input part 230 to input a command relating to the display device 100 to the remote control device 200. If the user input part 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input part 230 includes a touch screen, a user may touch a soft key of the touch screen to input a command relating to the display device 100 to the remote control device 200. In addition, the user input part 230 may include various kinds of input interfaces operable by a user, for example, a scroll key and a jog key, and this embodiment does not limit the scope of the present disclosure.

The sensor part 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display part 180 of the display device 100.

The output part 250 may output image or voice signals in response to the operation of the user input part 230, or may output image or voice signals corresponding to signals transmitted from the display device 100. A user may recognize whether the user input part 230 is operated or the display device 100 is controlled through the output part 250.

For example, the output part 250 may include an LED module 251 for flashing, a vibration module 253 for generating vibration, a sound output module 255 for outputting sound, or a display module 257 for outputting an image, if the user input part 230 is manipulated or signals are transmitted/received to/from the display device 100 through the wireless communication part 220.

Additionally, the power supply part 260 supplies power to the remote control device 200 and if the remote control device 200 does not move for a predetermined time, stops the power supply, so that power waste may be reduced. The power supply part 260 may resume the supply of power if a predetermined key provided at the remote control device 200 is operated.

The storage part 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control part 280 of the remote control device 200 may store, in the storage part 270, information on a frequency band for transmitting/receiving signals to/from the display device 100 paired with the remote control device 200 and refer to it.

The control part 280 controls general matters relating to the control of the remote control device 200. The control part 280 may transmit a signal corresponding to a predetermined key operation of the user input part 230 or a signal corresponding to the movement of the remote control device 200 sensed by the sensor part 240 to the display device 100 through the wireless communication part 220.

In addition, the sound acquisition part 290 of the remote control device 200 may acquire voice.

The sound acquisition part 290 may include at least one microphone and acquire voice through the microphone.

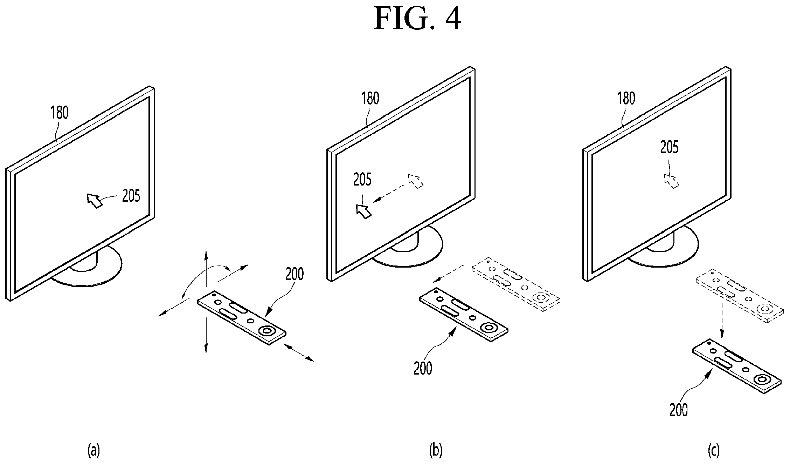

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display part 180.

A user may move or rotate the remote control device 200 vertically or horizontally. The pointer 205 displayed on the display part 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display part 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display part 180. Thus, a selected region in the display part 180 corresponding to the pointer 205 may be zoomed in and displayed in an enlarged size.

On the other hand, if a user moves the remote control device 200 close to the display part 180, a selection area in the display part 180 corresponding to the pointer 205 may be zoomed out and displayed in a reduced size.

On the other hand, if the remote control device 200 is moved away from the display part 180, a selection area may be zoomed out and if the remote control device 200 is moved closer to the display part 180, a selection area may be zoomed in.

Additionally, if a specific button in the remote control device 200 is pressed, recognition of a vertical or horizontal movement may be excluded. That is, if the remote control device 200 is moved away from or closer to the display part 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display part 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display part 180 and also may be displayed in correspondence to a plurality of points such as a line and a surface.

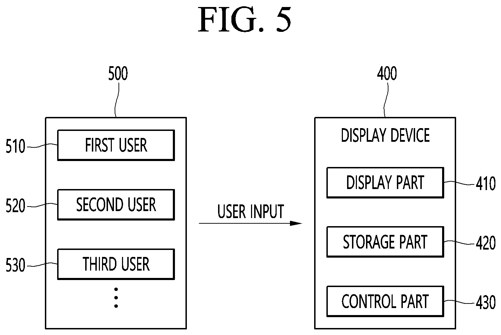

FIG. 5 is a block diagram for explaining the operation of a display device according to one embodiment of the present disclosure.

As illustrated in FIG. 5, the display device 400 of the present disclosure can receive user inputs from a plurality of users 500, including a first users 510, a second users 520, a third users 530, or the like and register individual accounts for each user.

For example, the display device 400 of the present disclosure may receive personal account information of the father if the first users 510 is the father and register and store the father's account, receive personal account information of the mother if the second users 520 is the mother and register and store the mother's account, and receive personal account information of the daughter if the third users 530 is the daughter and register and store the daughter's account.

In addition, the display device 400 of the present disclosure may include a display part 410 that displays a memo, a storage part 420 that stores the memo, and a control part 430 that processes the memo.

Here, the control part 430, when the personal account of the memo creator is selected from the list of registered accounts, can provide a personal memo creation window corresponding to the personal account of the memo creator, and when the personal memo and output setting information thereof are created through the personal memo creation window, store the created personal memo and output setting information thereof in the storage part 420, and when a condition satisfying the output setting information of the personal memo is reached, output the stored personal memo through the display part 410.

The control part 430, when providing a personal memo creation window and if a user input requesting a list of registered accounts is received, can control the display part 410 to display a registered account list window including pre-registered account information and when the personal account of the memo creator is selected from the list of registered accounts included in the registered account list window, provide a personal memo creation window corresponding to the personal account of the memo creator through the display part 410.

Here, the user input requesting the list of registered accounts may include at least one of user voice input, user button input, and user text input.

Additionally, the account information included in the registered account list window may include at least one of a user-specific personal identification (ID) name, a user-specific personal account name, and a user-specific personal email address, but this is only an example and is not limited thereto.

In some cases, the control part 430, when providing a personal memo creation window and if a pre-registered user-defined trigger word is entered, can control the display part 410 to display a registered account list window including pre-registered account information and if the personal account of the memo creator is selected from the registered account list included in the registered account list window, provide a personal memo creation window corresponding to the personal account of the memo creator.

In another case, the control part 430, when providing a personal memo creation window and if a pre-registered user-defined trigger word is input, can identify a user who has uttered the user-defined trigger word, extract a personal account of the identified user from a list of pre-stored registered accounts, and provide a personal memo creation window corresponding to the extracted personal account.

In addition, the control part 430, when providing a personal memo creation window, can include a memo content field into which memo content is inserted and a memo output setting field into which memo output setting information is inserted, but this is only one embodiment and is not limited thereto.

For example, a memo output setting field may include a memo recipient setting field, a memo sharer setting field, a memo overall sharing setting field, a memo feedback setting field, a memo security setting field, a memo grouping setting field, a conversation message setting field, a memo output time setting field, a memo output date setting field, a memo importance setting field, a memo urgency setting field, and the like, but this is only an example and is not limited thereto.

In some cases, the control part 430, when providing a personal memo creation window, can provide a guide message guiding that memo input is possible via voice or text, and when the user's voice or text input is received, insert the user's memo content into the memo content field of the personal memo creation window.

In addition, the control part 430, when providing a personal memo creation window and if the personal account of the memo creator is selected, can check whether a user input requesting memo creation is received, and when a user input requesting memo creation is received, provide a personal memo creation window corresponding to the personal account of the memo creator.

Here, the user input requesting the creation of a memo may include at least one of user voice input, user button input, and user text input.

Next, the control part 430, when outputting the personal memo, checks the output setting information of the personal memo, and if the output setting information includes the personal account of the memo recipient, can recognize the personal account recognition of the memo recipient as a personal memo output condition, and if the personal account of the memo recipient is recognized in accordance with the personal memo output condition, output the personal memo.

In addition, the control part 430, when outputting a personal memo, can check the output setting information of the personal memo, and if the output setting information includes a plurality of accounts of the memo sharer, recognize a plurality of accounts recognition of a memo sharer as a personal memo output condition, and if any one account among the plurality of accounts of the memo sharer is recognized in accordance with the condition for outputting the personal memo, output the personal memo.

**In** addition, the control part 430, when outputting a personal memo, can check the output setting information of the personal memo, and if the output setting information includes full account of the entire memo sharing, recognize the full account recognition of the entire memo sharing as a personal memo output condition, and if any one account among full account of the entire memo sharing is recognized in accordance with the condition for outputting the personal memo, output the personal memo.

**In** addition, the control part 430, when outputting a personal memo, can check the output setting information of the personal memo, and if the output setting information includes the personal account of the memo recipient and the memo feedback setting, recognize the personal account recognition of the memo recipient and add of a memo feedback field as a personal memo output condition, and if the personal account of the memo recipient is recognized in accordance with the personal memo output condition, output a personal memo with the memo feedback field added.

Here, the control part 430 can output a personal memo to which a memo feedback field is added, and if a request for feedback transmission is received by entering a reply from a memo recipient in the memo feedback field of the personal memo, store the personal memo including the reply from the memo recipient in the storage part 420, and if the personal account recognition of the memo creator is recognized, output a personal memo including the reply from the memo recipient.

Additionally, the control part 430, when outputting a personal memo to which a memo feedback field is added, may generate and provide a notification message indicating that the memo creator requests a reply feedback.

**In** addition, the control part 430, when outputting a personal memo to which a memo feedback field is added and if a request to reject reply feedback is received from a memo recipient, can generate a notification message indicating that the memo recipient rejects the reply feedback and store it in the storage part 420, and if the personal account of the memo creator is recognized, output a notification message indicating that the memo recipient rejects the reply feedback.

Here, the user input requesting a rejection of the reply feedback may include at least one of user voice input, user button input, and user text input.

In addition, the control part 430, when outputting a personal memo, can check the output setting information of the personal memo, if the output setting information includes the personal account of the memo recipient and the memo security setting, recognize the personal account recognition of the memo recipient and addition of a security notification message as a personal memo output condition, and if the personal account of the memo recipient is recognized in accordance with the personal memo output condition, output a security notification message having a password input field, and if a password is entered in the password input field of the security notification message, output the personal memo.

In addition, the control part 430, when outputting a personal memo, can check the output setting information of the personal memo, if the output setting information includes the personal account of the memo recipient and the memo security setting, recognize the personal account recognition of the memo recipient and the security recognition as the personal memo output conditions, if the personal account of the memo recipient is recognized in accordance with the personal memo output conditions, activate the camera and the microphone, and if it is recognized that only the memo recipient exists by analyzing at least one of an image acquired from the camera and a voice input from the microphone, output the personal memo.

In addition, the control part 430, when outputting the personal memo, can check the output setting information of the personal memo, if the output setting information includes the personal account of the memo recipient and the memo security setting, recognize the personal account recognition of the memo recipient, addition of a security notification message, and the security recognition as a personal memo output condition, if the personal account of the memo recipient is recognized in accordance with the personal memo output condition, outputs a security notification message having a password input field, if a password is entered in the password input field of the security notification message, activate the camera and the microphone, and if it is recognized that only the memo recipient exists by analyzing at least one of an image acquired from the camera and a voice input from the microphone, output the personal memo.

In addition, the control part 430, when outputting a personal memo, can check the output setting information of the personal memo, if the output setting information includes a memo grouping setting, recognize a plurality of accounts recognition of a memo sharer included in the memo group as a personal memo output condition, and if any one account among the plurality of accounts of a memo sharer included in the memo group is recognized in accordance with the personal memo output condition, output the personal memo.

In addition, the control part 430, when outputting a personal memo, can check the output setting information of the personal memo, if the output setting information includes the personal account of the memo recipient and the conversation message setting, recognize the personal account recognition of the memo recipient and the addition of a conversation message input field as a personal memo output condition, and if the personal account of the memo recipient is recognized in accordance with the personal memo output condition, output a personal memo with the conversation message input field added.

Here, the control part 430 can output a personal memo to which a conversation message input field is added, if a conversation message of a memo recipient is entered in the conversation message input field of the personal memo, store the personal memo including the conversation message of the memo recipient in the storage part 420, and if the personal account of the memo creator is recognized, output the personal memo including the conversation message of the memo recipient.

In addition, the control part 430 can output a personal memo including a conversation message of a memo recipient, if a conversation message of a memo creator is input in a conversation message input field of the personal memo, store a personal memo including a conversation message of a memo creator in a storage part 420, and if a personal account of a memo recipient is recognized, output a personal memo including a conversation message of a memo creator.

In addition, the control part 430, when outputting a personal memo, can check the output setting information of the personal memo, if the output setting information includes at least one of the memo output time setting and the memo output date setting, recognize the memo output time and the memo output date as personal memo output conditions, and output the personal memo if at least one of the memo output time and the memo output date arrives in accordance with the personal memo output condition.

In addition, the control part 430, when outputting a personal memo, can check the output setting information of the personal memo, if the output setting information includes a personal account of the memo recipient and a memo importance or urgency setting, recognize the voice recognition of the memo recipient and the addition of a memo importance or urgency notification message as a personal memo output condition, and when the display device 400 is off or on and if the voice of the memo recipient is recognized in accordance with the personal memo output condition, output the memo importance or urgency notification message, and if the display device 400 is on, output the personal memo as text or voice.

In this way, the present disclosure can provide a personal memo creation window corresponding to a personal account, and if a personal memo and output setting information of the personal memo are created through the personal memo creation window, output the personal memo corresponding to the output setting information of the personal memo, thereby providing a personal memo function for each registered account and thus improving user convenience.

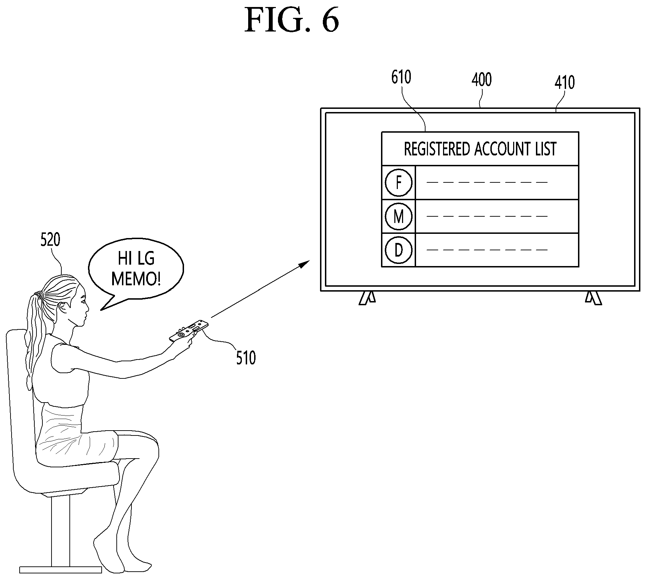

FIG. 6 is a view for explaining a process for requesting a list of registered accounts of a display device according to one embodiment of the present disclosure.

As illustrated in FIG. 6, the display device 400 of the present disclosure, if a user input requesting a registered account list is received, may display a registered account list window 610 including pre-registered account information on the display screen 410.

Here, the user input requesting the list of registered accounts may include at least one of user voice input, user button input, and user text input.

For example, a mother, who is a second user 520, can request a registered account list window 610 including pre-registered account information from the display device 400 through voice input or user button input using a remote control device 10.

In addition, the display device 400 of the present disclosure, if the personal account of the mother, who is the memo creator, is selected from the list of registered accounts included in the registered account list window 610, can provide a personal memo creation window corresponding to the personal account of the mother, who is the memo creator, on the display screen 410.

In some cases, the display device 400 of the present disclosure, if a pre-registered user-defined trigger word is input, can display a registered account list window 610 including pre-registered account information on the display screen 410.

In another case, the display device 400 of the present disclosure, if a pre-registered user-defined trigger word is input, can identify a user who has uttered a user-defined trigger word, extract a personal account of the identified user from a list of pre-stored registered accounts, and provide a personal memo creation window corresponding to the extracted personal account.

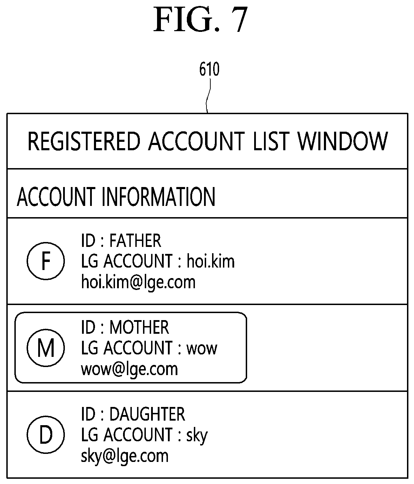

FIG. 7 is a view illustrating a registered account list window of a display device according to one embodiment of the present disclosure.

As illustrated in FIG. 7, the account information included in the registered account list window 610 of the present disclosure may include at least one of a user-specific personal identification (ID) name, a user-specific personal account name, and a user-specific personal email address, but this is only an example and is not limited thereto.

For example, the display device 400 of the present disclosure, if the first user is the father, can receive personal account information of the father and register and store the father's account.

Here, father's account may include father's personal identification (ID) name, father's personal account name, and father's personal email address.

Additionally, the present disclosure, if the second user is a mother, can receive the mother's personal account information and register and store the mother's account.

Here, mother's account may include mother's personal identification (ID) name, mother's personal account name, and mother's personal email address.

Additionally, the present disclosure, if the third user is a daughter, can receive the daughter's personal account information and register and store the daughter's account.

Here, the daughter's account may include the daughter's personal identification (ID) name, the daughter's personal account name, and the daughter's personal email address.

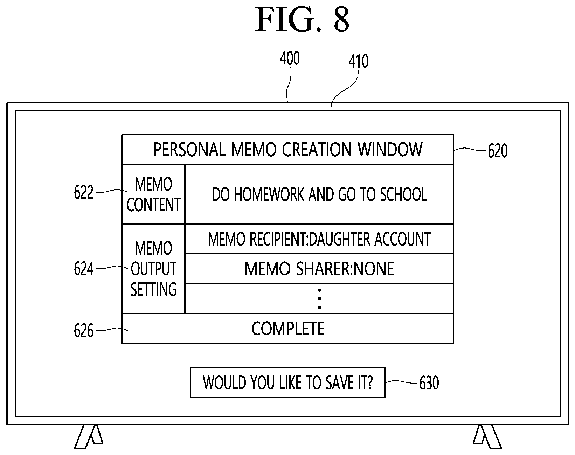

FIG. 8 is a view illustrating a personal memo creation window of a display device according to an embodiment of the present disclosure.

As illustrated in FIG. 8, the display device 400 of the present disclosure, if the personal account of the memo creator is selected from the list of registered accounts, can provide a personal memo creation window 620 corresponding to the personal account of the memo creator on the display screen 410.

Here, the present disclosure, when providing a personal memo creation window 620, can include a memo content field 622 in which memo content is inserted, a memo output setting field 624 in which memo output setting information is inserted, and a memo output setting completion field 626, but this is only one embodiment and is not limited thereto.

For example, the memo output setting field 624 may include a memo recipient setting field, a memo sharer setting field, a memo overall sharing setting field, a memo feedback setting field, a memo security setting field, a memo grouping setting field, a conversation message setting field, a memo output time setting field, a memo output date setting field, a memo importance setting field, and a memo urgency setting field, but this is only one example and is not limited thereto.

For example, if the memo creator is a mother, the mother may select mother's personal account from the list of registered accounts, if a personal memo creation window 620 is provided, enter a memo titled "Do my homework and go to school" in the memo content field 622, set the memo recipient to the daughter's account in the memo output setting field 624, set the shared recipient to none, and enter "setup complete" in the memo output setting completion field 626.

Next, the present disclosure, when a personal memo and personal memo setting information are created through a personal memo creation window 620, can provide a save inquiry message 630.

Next, the present disclosure, if the user requests storage through a storage inquiry message 630, can store the generated personal memo and personal memo setting information as a pair corresponding to each other.

In some cases, the present disclosure, when providing a personal memo creation window 620, can provide a guide message guiding that memo input is possible via voice or text, and if the user's voice or text input is received, insert the user's memo content into the memo content field 622 of the personal memo creation window 620.

In addition, the present disclosure, when providing a personal memo creation window 620 and if a personal account of a memo creator is selected, and when a user input requesting memo creation is received, can confirm whether a user input requesting memo creation is received, and if user input requesting memo creation is received, provide a personal memo creation window 620 corresponding to the personal account of the memo creator.

Here, the user input requesting the creation of a memo may include at least one of user voice input, user button input, and user text input.

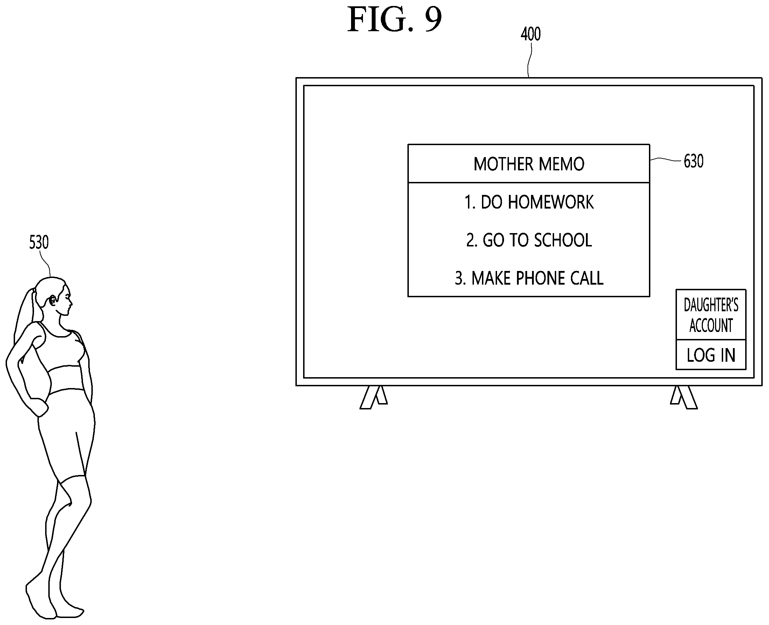

FIGS. 9 to 15 are views for explaining a personal memo output scenario according to one embodiment of the present disclosure.

As illustrated in FIGS. 9 to 15, the present disclosure, if a personal memo and output setting information thereof are created through a personal memo creation window, can store a personal memo and output setting information thereof, and if a condition satisfying the output setting information of the personal memo is reached, output the stored personal memo.

FIG. 9 is, as a first scenario of personal memo output, a personal memo output scenario in which the memo recipient is set to a personal account.

As illustrated in FIG. 9, the display device 400 of the present disclosure can check the output setting information of a personal memo, and if the output setting information includes a personal account of a memo recipient, recognize the personal account recognition of the memo recipient as a personal memo output condition, and if the personal account of the memo recipient is recognized in accordance with the personal memo output condition, output the personal memo.

For example, if the third users 530 is a daughter, and the daughter logs in with her daughter account, the display device 400 of the present disclosure, if the daughter account is recognized based on the personal memo output condition set as the daughter account as the memo recipient, can output the mother's memo 630, who is the memo creator.

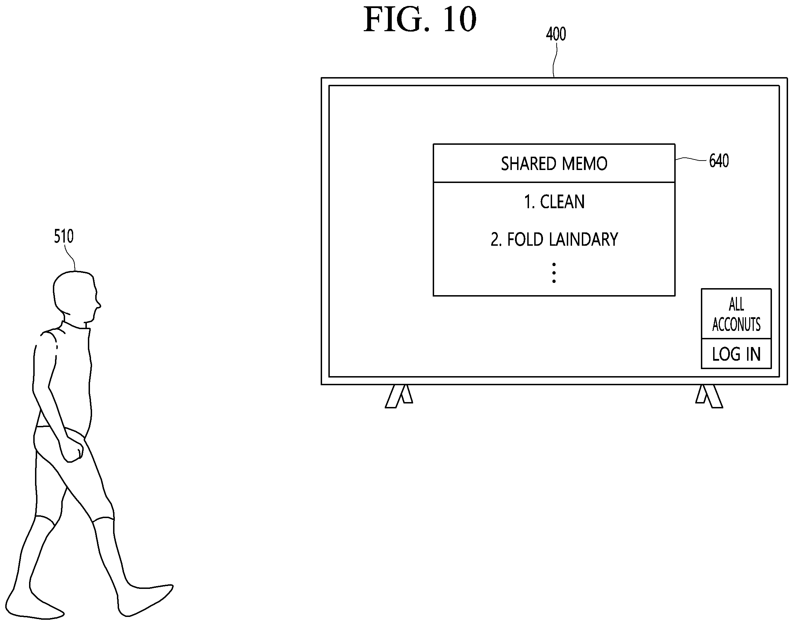

FIG. 10 is, as a second scenario for personal memo output, a personal memo output scenario in which the memo recipient is set to a global shared account.

As illustrated in FIG. 10, the display device 400 of the present disclosure can check the output setting information of the personal memo, if the output setting information includes full account of the entire memo sharing, recognize the full account recognition of the entire memo sharing as a personal memo output condition, and if any one account among full account of the entire memo sharing is recognized in accordance with the personal memo output condition, output the personal memo.

For example, if the first user 510 is a father, and if the father logs in with his father account, the display device 400 of the present disclosure, if the father account is recognized first based on a personal memo output condition where the memo recipient is set to the entire account, can output a shared memo 640.

In some cases, the present disclosure can check output setting information of a personal memo, and if the output setting information includes a plurality of accounts of a memo sharer, recognize a plurality of accounts recognition of a memo sharer as a personal memo output condition, and if any one account among the plurality of accounts of a memo sharer is recognized in accordance with the condition for outputting a personal memo, output a personal memo.

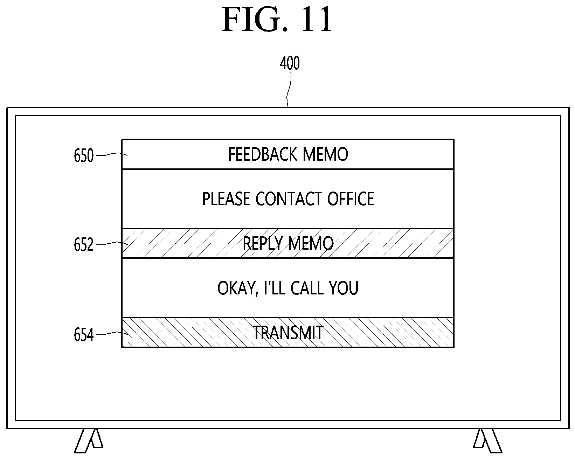

FIG. 11 is, as a third scenario of personal memo output, a personal memo output scenario in which the memo recipient is set to a personal account and sets as the memo feedback.

As illustrated in FIG. 11, the display device 400 of the present disclosure can check the output setting information of a personal memo, and if the output setting information includes a personal account of a memo recipient and a memo feedback setting, recognize the personal account recognition of the memo recipient and the addition of a memo feedback field as a personal memo output condition, and if the personal account of the memo recipient is recognized in accordance with the personal memo output condition, output a personal memo 650 to which a memo feedback field is added.

Here, the present disclosure can output a personal memo 650 to which a memo feedback field is added, if a feedback transmission request is received by entering a memo recipient's reply in the memo feedback field of the personal memo, stores a feedback memo 652 including a memo recipient's reply, and if a personal account of the memo creator is recognized, output a personal memo 650 including a memo recipient's reply.

Additionally, the present disclosure may generate and provide a notification message that the memo creator requests a reply feedback when outputting a personal memo 650 to which a memo feedback field is added.

In addition, the present disclosure, when outputting a personal memo to which a memo feedback field is added and if a request to reject the reply feedback is received from the memo recipient, can generate and store a notification message indicating that the memo recipient has rejected the reply feedback, and if the personal account of the memo creator is recognized, output a notification message indicating that the memo recipient has rejected the reply feedback.

Here, the user input requesting a rejection of the reply feedback may include at least one of user voice input, user button input, and user text input.

For example, a personal memo 650 to which a memo feedback field is added may include a feedback memo 652 containing a reply to the memo feedback field and a transmission input field 654 requesting transmission of the feedback memo 652.

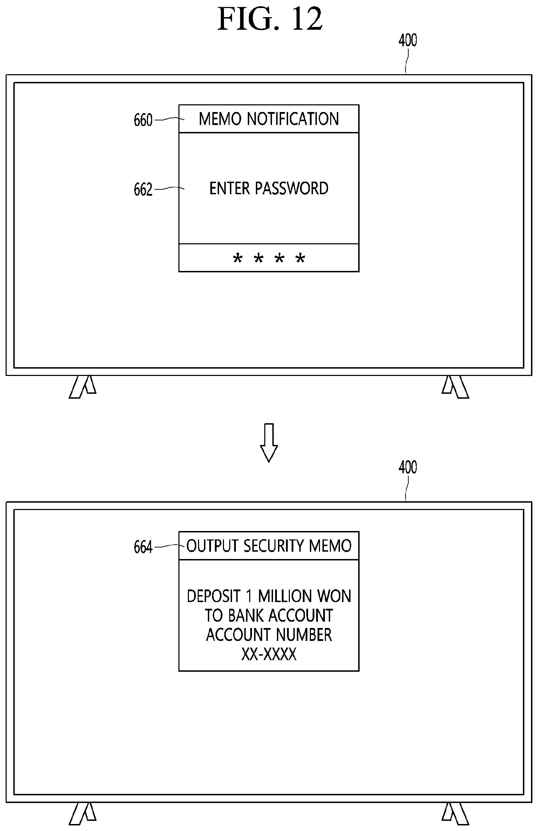

FIG. 12 is, as a fourth scenario of personal memo output, a personal memo output scenario in which the memo recipient is set to a personal account and sets as the memo security.

As illustrated in FIG. 12, the display device 400 of the present disclosure can check the output setting information of a personal memo, and if the output setting information includes a personal account of a memo recipient and a memo security setting, recognize the personal account recognition of the memo recipient and the addition of a security notification message as a personal memo output condition, if the personal account of the memo recipient is recognized in accordance with the personal memo output condition, output a security notification message 660 having a password input field, and if a password is entered in the password input field 662 of the security notification message 660, output a personal memo 664.

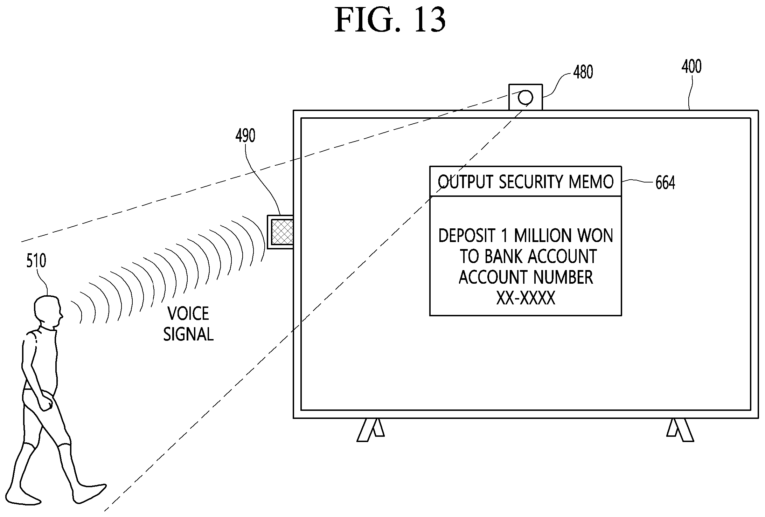

FIG. 13 is, as a fifth scenario of personal memo output, a personal memo output scenario in which the memo recipient is set to a personal account and sets as the memo security.

As illustrated in FIG. 13, the display device 400 of the present disclosure can check the output setting information of a personal memo, if the output setting information includes a personal account of a memo recipient and a memo security setting, recognize the personal account recognition and security recognition of the memo recipient as personal memo output conditions, if the personal account of the memo recipient is recognized in accordance with the personal memo output conditions, activate the camera 480 and the microphone 490, and if it is recognized that only the memo recipient exists by analyzing at least one of an image acquired from the camera 480 and a voice input from the microphone 49, output the personal memo 664.

In some cases, the present disclosure can check output setting information of a personal memo, if the output setting information includes a personal account of a memo recipient and a memo security setting, recognize the personal account recognition of the memo recipient, the addition of a security notification message, and security recognition as a personal memo output condition, and if the personal account of the memo recipient is recognized in accordance with the personal memo output condition, output a security notification message having a password input field, if a password is entered in the password input field of the security notification message, activate a camera 480 and a microphone 490, and if it is recognized that only the memo recipient exists by analyzing at least one of an image acquired from the camera 480 and a voice input from the microphone 490, output a personal memo 664.

Here, the present disclosure, if it recognizes that a third party exists as well as the memo recipient by analyzing at least one of an image acquired from a camera 480 and an audio input from a microphone 490, can stop outputting a personal memo 664.

The reason is to prevent any third party other than the individual recipient of the memo from viewing the personal memo 664.

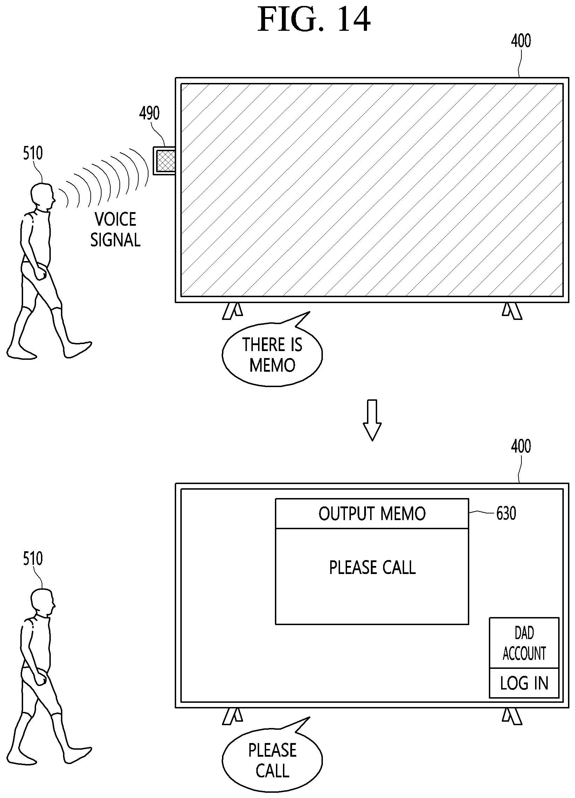

FIG. 14 is, as a sixth scenario of personal memo output, a personal memo output scenario in which the memo recipient is set to a personal account and sets as the memo importance or urgency.

As illustrated in FIG. 14, the display device 400 of the present disclosure can check the output setting information of a personal memo, if the output setting information includes a personal account of a memo recipient and a memo importance or urgency setting, recognize the voice recognition of the memo recipient and the addition of a memo importance or urgency notification message as a personal memo output condition, when the display device 400 is in an off or on state and if the voice of the memo recipient is recognized in accordance with the personal memo output condition, output the memo importance or urgency notification message, and if the display device 400 is in an on state, output the personal memo 630 as text or voice.

For example, if the memo recipient is set to the father account, which is the first users 510, and the memo is set to have high importance or urgency, the present disclosure, when the display device 400 is turned off and if the voice of the father, which is the first users 510, is recognized, recognize the father account, and quickly output the personal memo 630 with high importance or urgency so that the father can view it.

Here, in the present disclosure, if the voice of the first users 510, that is, the father, is recognized while the display device 400 is turned off, a notification voice indicating that there is a memo may be first output.

In addition, the present disclosure can recognize the father's voice, turn on the display device 400 with the father's account, and read the contents of a personal memo 630 with high importance or urgency by voice.

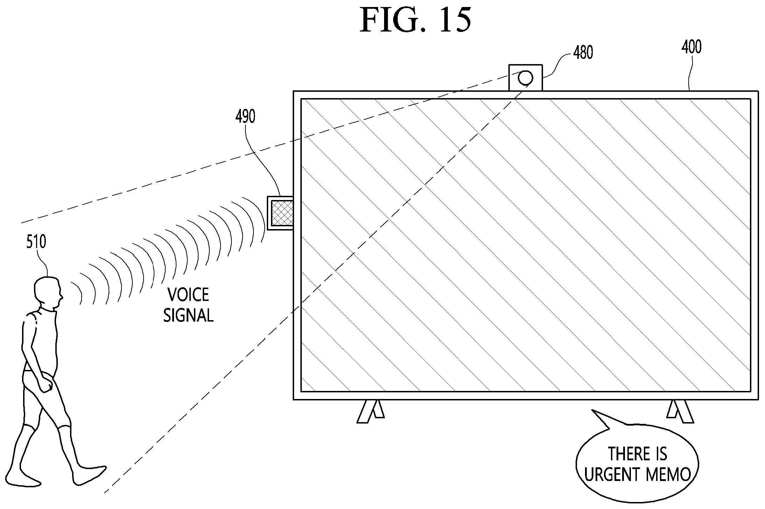

FIG. 15 is, as a seventh scenario of personal memo output, a personal memo output scenario in which the memo recipient is set to a personal account and sets as the memo importance or urgency.

As illustrated in FIG. 15, the display device 400 of the present disclosure can check output setting information of a personal memo, and if the output setting information includes a personal account of a memo recipient and a memo importance or urgency setting, recognize voice recognition of the memo recipient and addition of a memo importance or urgency notification message as a personal memo output condition, when the display device 400 is in an off or on state and if the voice of the memo recipient is recognized in accordance with the personal memo output condition, output a memo importance or urgency notification message, activate a camera 480 and analyzes whether another third party exists around the memo recipient based on an image of the camera 480, and if another third party does not exist, switch the display device 400 to an on state to output the personal memo as text or voice.

For example, if the memo recipient is set to the father account, which is the first users 510, and the memo is set to a high importance or urgency memo, the present disclosure, when the display device 400 is turned off and if the voice of the dad, which is the first users 510 is recognized, can recognize the father account, activate the camera 480, check whether there is another third party around the dad based on the image of the camera 480, and if there is no other third party around the dad, switch the display device 400 to the on state and quickly output the personal memo, which is high importance or urgency, so that the father can view it.

Here, in the present disclosure, if the voice of the first users 510, that is, the father, is recognized while the display device 400 is turned off, an alarm voice indicating that there is an urgent memo may be output first.

In addition, the present disclosure can recognize the father's voice, turn on the display device 400 with the father's account, and read the contents of a personal memo 630 with high importance or urgency by voice.

In some cases, the present disclosure can check output setting information of a personal memo, if the output setting information includes a memo grouping setting, recognize a plurality of accounts recognition of a memo sharer included in a memo group as a personal memo output condition, and if any one account among multiple accounts of a memo sharer included in a memo group is recognized in accordance with the personal memo output condition, output a personal memo.

In another case, the present disclosure can check output setting information of a personal memo, if the output setting information includes a personal account of a memo recipient and a conversation message setting, recognize the personal account recognition of the memo recipient and the addition of a conversation message input field as a personal memo output condition, and if the personal account of the memo recipient is recognized in accordance with the personal memo output condition, output a personal memo with a conversation message input field added.

Here, the present disclosure can output a personal memo to which a conversation message input field is added, if a conversation message of a memo recipient is entered in the conversation message input field of the personal memo, store a personal memo including a conversation message of a memo recipient, and if a personal account of a memo creator is recognized, output a personal memo including a conversation message of a memo recipient.

In addition, the present disclosure can output a personal memo including a conversation message of a memo recipient, if a conversation message of a memo creator is input into a conversation message input field of the personal memo, store a personal memo including a conversation message of a memo creator, and if a personal account of a memo recipient is recognized, output a personal memo including a conversation message of a memo creator.

In another case, the present disclosure can check output setting information of a personal memo, and if the output setting information includes at least one of a memo output time setting and a memo output date setting, recognize the memo output time and the memo output date as personal memo output conditions, and if at least one of the memo output time and the memo output date arrives in accordance with the personal memo output condition, output the personal memo.

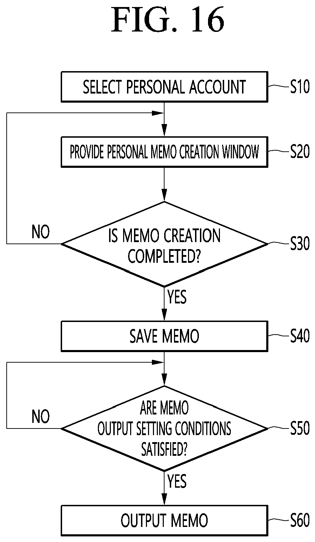

FIG. 16 is a flowchart for explaining a method for operating a display device according to an embodiment of the present disclosure.

As illustrated in FIG. 16, the present disclosure can check whether a personal account of a memo creator is selected from a list of registered accounts (S10).

In addition, the present disclosure, if the personal account of the memo creator is selected, can provide a personal memo creation window corresponding to the personal account of the memo creator (S20).

Here, the present disclosure, if a pre-registered user-defined trigger word is input, can identify a user who has uttered a user-defined trigger word, extract a personal account of the identified user from a list of pre-stored registered accounts, and provide a personal memo creation window corresponding to the extracted personal account.

As an example, when providing a personal memo creation window, the present disclosure may include a memo content field into which memo content is inserted and a memo output setting field into which memo output setting information is inserted.

Next, the present disclosure can confirm whether a personal memo and output setting information thereof are created through a personal memo creation window (S30).

Next, the present disclosure, if the personal memo and output setting information thereof are generated, can store the generated personal memo and output setting information thereof (S40).

In addition, the present disclosure can check whether a condition satisfying the output setting information of a personal memo has arrived (S50).

Next, the present disclosure, if a condition satisfying the output setting information of the personal memo is arrived, can output a stored personal memo (S60).

Here, the present disclosure can check the output setting information of a personal memo, if the output setting information includes a personal account of a memo recipient, recognize the personal account recognition of the memo recipient as a personal memo output condition, and if the personal account of the memo recipient is recognized in accordance with the personal memo output condition, output the personal memo.

In some cases, the present disclosure can check the output setting information of a personal memo, if the output setting information includes full account of the entire memo sharing, recognize the full account recognition of the entire memo sharing as a personal memo output condition, and if any one account among full account of the entire memo sharing is recognized in accordance with the personal memo output condition, output the personal memo.

In another case, the present disclosure can check output setting information of a personal memo, if the output setting information includes a personal account of a memo recipient and a memo feedback setting, recognize the personal account recognition of the memo recipient and the addition of a memo feedback field as a personal memo output condition, and if the personal account of the memo recipient is recognized in accordance with the personal memo output condition, output a personal memo with a memo feedback field added.

As another case, the present disclosure can check output setting information of a personal memo, if the output setting information includes a personal account of a memo recipient and a memo security setting, recognize the personal account recognition of the memo recipient and the addition of a security notification message as a personal memo output condition, if the personal account of the memo recipient is recognized in accordance with the personal memo output condition, output a security notification message having a password input field, and if a password is entered in the password input field of the security notification message, output the personal memo.

In another case, the present disclosure can check output setting information of a personal memo, if the output setting information includes a personal account of a memo recipient and a memo security setting, recognize the personal account recognition of the memo recipient and security recognition as a personal memo output condition, if the personal account of the memo recipient is recognized in accordance with the personal memo output condition, activate a camera and a microphone, and if it is recognized that only the memo recipient exists by analyzing at least one of an image acquired from the camera and a voice input from the microphone, output the personal memo.

As another case, the present disclosure can check output setting information of a personal memo, if the output setting information includes a memo grouping setting, recognize a plurality of accounts recognition of a memo sharer included in a memo group as a personal memo output condition, and if any one account among the plurality of accounts of a memo sharer included in the memo group is recognized in accordance with the personal memo output condition, output the personal memo.

As another case, the present disclosure can check output setting information of a personal memo, if the output setting information includes a personal account of a memo recipient and a conversation message setting, recognize the personal account recognition of the memo recipient and the addition of a conversation message input field as a personal memo output condition, and if the personal account of the memo recipient is recognized in accordance with the personal memo output condition, output a personal memo with a conversation message input field added.

In another case, the present disclosure can check output setting information of a personal memo, if the output setting information includes a personal account of a memo recipient and a memo importance or urgency setting, recognize voice recognition of the memo recipient and addition of a memo importance or urgency notification message as a personal memo output condition, when the display device is off or on and if the memo recipient's voice is recognized corresponding to the personal memo output condition, output the memo importance or urgency notification message, and if the display device is on, output the personal memo as text or voice.

In this way, the present disclosure can provide a personal memo creation window corresponding to a personal account, and if a personal memo and output setting information of the personal memo are created through the personal memo creation window, output the personal memo corresponding to the output setting information of the personal memo, provide a personal memo function for each registered account, and thus improve user convenience.

The present disclosure described above can be implemented as a computer-readable code on a medium in which a program is recorded. The computer-readable medium includes all kinds of recording devices in which data that can be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include a processor 180 of an artificial intelligence device.

### [Industrial Applicability]

The display device according to the present disclosure has remarkable industrial applicability because it has the effect of improving user convenience by providing a personal memo function for each registered account.

## Claims

1. A display device comprising:
a display part displaying a memo;
a storage part storing the memo; and
a control part processing the memo,
wherein the control part,
if a personal account of a memo creator is selected from a list of registered accounts, provides a personal memo creation window corresponding to the personal account of the memo creator, if the personal memo and the output setting information thereof are created through the personal memo creation window, stores the created personal memo and the output setting information thereof in the storage part, and, if a condition satisfying the output setting information of the personal memo is reached, outputs the stored personal memo.

2. The display device of claim 1,
wherein the control part,
when providing the personal memo creation window, if a user input requesting the registered account list is received, controls the display part to display a registered account list window including pre-registered account information, and if the personal account of the memo creator is selected from the registered account list included in the registered account list window, provides a personal memo creation window corresponding to the personal account of the memo creator.

3. The display device of claim 1,
wherein the control part,
when providing the personal memo creation window, if a pre-registered user-defined trigger word is input, identifies the user who has uttered the user-defined trigger word, extracts the personal account of the identified user from the pre-stored registered account list, and provides a personal memo creation window corresponding to the extracted personal account.

4. The display device of claim 1,
wherein the control part,
when providing the personal memo creation window, includes a memo content field into which memo content is inserted and a memo output setting field into which memo output setting information is inserted.

5. The display device of claim 4,
wherein the control part,
when providing the personal memo creation window, provides a guide message guiding that memo input is possible via voice or text, and if the user's voice or text input is received, inserts the user's memo content into the memo content field of the personal memo creation window.

6. The display device of claim 1,
wherein the control part,
when outputting the personal memo, checks the output setting information of the personal memo, and if the output setting information includes the personal account of the memo recipient, recognizes the personal account recognition of the memo recipient as a personal memo output condition, and if the personal account of the memo recipient is recognized in accordance with the personal memo output condition, outputs the personal memo.

7. The display device of claim 1,
wherein the control part,
when outputting the personal memo, checks the output setting information of the personal memo, if the output setting information includes full account of the entire memo sharing, recognizes the full account recognition of the entire memo sharing as a personal memo output condition, and if any one account among the entire accounts of the entire memo sharing is recognized in accordance with the personal memo output condition, outputs the personal memo.

8. The display device of claim 1,
wherein the control part,
when outputting the personal memo, checks the output setting information of the personal memo, and if the output setting information includes the personal account of the memo recipient and the memo feedback setting, recognizes the personal account recognition of the memo recipient and the addition of the memo feedback field as the personal memo output condition, and if the personal account of the memo recipient is recognized in accordance with the personal memo output condition, outputs the personal memo to which the memo feedback field is added.

9. The display device of claim 8,
wherein the control part,
if a request for feedback transmission is received by outputting a personal memo to which the memo feedback field is added and entering a reply from a memo recipient in the memo feedback field of the personal memo, stores the personal memo including the reply from the memo recipient in the storage part, and if the personal account of the memo creator is recognized, outputs the personal memo including the reply from the memo recipient.

10. The display device of claim 1,
wherein the control part,
when outputting the personal memo, checks the output setting information of the personal memo, and if the output setting information includes the personal account of the memo recipient and the memo security setting, recognizes the personal account recognition of the memo recipient and the addition of a security notification message as a personal memo output condition, and if the personal account of the memo recipient is recognized in accordance with the personal memo output condition, outputs a security notification message having the password input field, and if a password is entered in the password input field of the security notification message, outputs the personal memo.

11. The display device of claim 1,
wherein the control part,
when outputting the personal memo, checks the output setting information of the personal memo, and if the output setting information includes the personal account of the memo recipient and the memo security setting, recognizes the personal account recognition recognition and security recognition of the memo recipient as the personal memo output condition, and if the personal account of the memo recipient is recognized in accordance with the personal memo output condition, activates the camera and the microphone, and if analyzing at least one of the image acquired from the camera and the voice input from the microphone, and recognizing that only the memo recipient exists, outputs the personal memo.

12. The display device of claim 1,
wherein the control part,
when outputting the personal memo, checks the output setting information of the personal memo, and if the output setting information includes a memo grouping setting, recognizes a plurality of accounts recognition of a memo sharer included in the memo group as a personal memo output condition, and if any one account among the plurality of accounts of a memo sharer included in the memo group is recognized in accordance with the personal memo output condition, outputs the personal memo.

13. The display device of claim 1,
wherein the control part,
when outputting the personal memo, checks the output setting information of the personal memo, and if the output setting information includes the personal account of the memo recipient and the conversation message setting, recognizes the personal account recognition of the memo recipient and the addition of the conversation message input field as the personal memo output condition, and if the personal account of the memo recipient is recognized in accordance with the personal memo output condition, outputs the personal memo to which the conversation message input field is added.

14. The display device of claim 1,
wherein the control part,
when outputting the personal memo, checks the output setting information of the personal memo, and if the output setting information includes a personal account of the memo recipient and a memo importance or urgency setting, recognizes the voice recognition of the memo recipient and the addition of a memo importance or urgency notification message as a personal memo output condition, and when the display device is in an off or on state, if the voice of the memo recipient is recognized in accordance with the personal memo output condition, outputs the memo importance or urgency notification message, and if the display device is turned on, outputs the personal memo as text or voice.

15. A method for operating a display device for outputting a personal memo comprises:
a step of selecting a personal account of a memo creator from a list of registered accounts;
a step of providing a personal memo creation window corresponding to the personal account of the memo creator;
a step of checking whether a personal memo and the output setting information thereof are created through the personal memo creation window;
a step of storing the created personal memo and the output setting information thereof when the personal memo and the output setting information thereof are created;
a step of checking whether a condition satisfying the output setting information of the personal memo has arrived; and
a step of outputting the stored personal memo if a condition satisfying the output setting information of the personal memo has arrived.
